# EUROPEAN PATENT APPLICATION

(11) **EP 1 164 495 A2**
(43) Date of publication of application: **19.12.2001**
(21) Application number: 01113923.5
(22) Date of filing: 07.06.2001
(51) Int. Cl.: G06F 15/78, G06F 12/08

(54) **Integrated circuit for modem**

(30) Priority: 07.06.2000 JP 2000170327
(71) Applicant: NEC CORPORATION, Tokyo (JP)
(72) Inventor: Ono, Mitsuhiro, c/o Nec Corporation, Tokyo (JP)
(74) Representative: Betten & Resch

(57) **Abstract**

To reduce the circuit area and cost of the integrated circuit for modem. The RAM controller 5 performs such a control that the instructions are prefetched from the external instruction ROM to the instruction RAM 2 on a bank basis and the instruction RAM 2 is caused to operate as a cache memory for the external instruction ROM and the CPU and the hardware unit 1 are caused to the time-divisionally share part of banks of the instruction RAM 2.

## Description

### FIELD OF THE INVENTION

The present invention relates to an integrated circuit for modem and in particular to an integrated circuit for modem including an instruction RAM which is in plural bank configuration and functions as a cache memory for an external instruction ROM.

### BACKGROUND OF THE INVENTION

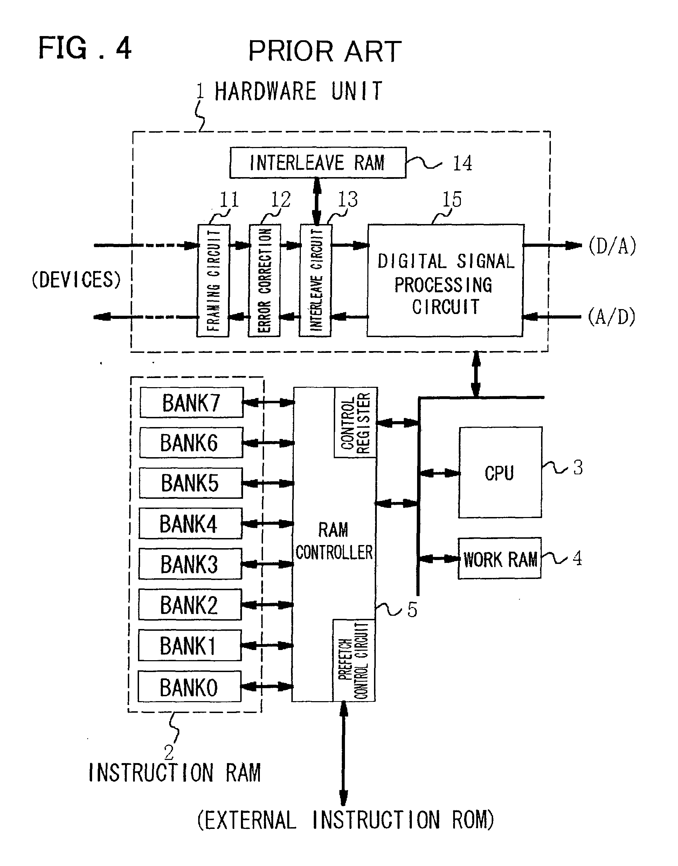

Such type of integrated circuits for modem has heretofore been used for modems for high rate data communications such as ADSL (Asymmetric Digital Subscriber Line) communications scheme. Fig. 4 shows a block diagram of an exemplary configuration of such prior art integrated circuit for modem.

Referring now to Fig. 4, such type of integrated circuit for modem comprises a hardware unit 1, instruction RAM 2, CPU 3, work RAM 4, and RAM controller 5.

The hardware unit 1 comprises a framing circuit 11, error correction circuit 12, interleave circuit 13, interleave RAM 14 and digital signal processing circuit 15 and conducts baseband processing and digital modulation and demodulation for transmission and reception data between externally connected D/A or A/D convertor and device. The framing circuit 11 conducts framing and deframing for transmission and reception data in a form of ADSL standard. The error correction circuit 12 conducts addition of an error correcting code to the transmission and reception data or the error correction therefor. The interleave circuit conducts interleaving and deinterleaving for transmission and reception data. The interleave RAM 14 is an interleave processing memory which is accessed by the interleave circuit 13. The digital signal processing circuit 15 conducts digital modulation and demodulation for transmission and reception data.

The instruction RAM 2 is a memory having a configuration of 1K word by 8 banks and functions as a cache memory for the external instruction RAM which prefetches on a bank basis instructions from externally connected instruction ROM.

The CPU 3 executes instructions, which are prefetched from the external instruction ROM to the instruction RAM 2 for controlling the hardware unit 1. The work RAM 4 is a memory, which is accessed for working.

The RAM controller 5 comprises a prefetch control circuit and control register. The prefetch control circuit causes the instructions to be prefetched from the external instruction ROM to the instruction RAM 2 on a bank basis for controlling the instruction RAM 2 so that they function as a cache memory for the external instruction ROM. The CPU 3 presets commands in the control register. Control in the RAM controller 5 is conducted in response to the preset content.

In the prior art integrated circuit for modem, the instructions which are stored in the external instruction ROM are prefetched to the instruction RAM 2 on a bank basis by the RAM controller 5. The CPU 3 executes the instruction, which has been prefetched, to the instruction RAM 2 so that the hardware unit 1 is controlled. At this time the instruction RAM 2 functions as the cache memory for the external instruction ROM. The CPU is capable of executing instructions at a high rate at the access time to the instruction RAM 2 rather than the access time to the external instruction ROM so that it is capable of processing the control of the hardware unit 1.

The base band processing such as framing, error correction, interleaving, and digital modulation and demodulation is also conducted for the transmission and reception data in a parallel manner by each of the circuits 11 to 15 in the hardware unit 1.

The cache operation of the instruction RAM and the parallel operation in the hardware unit implement a high rate communications modem such as ADSL modem.

### SUMMARY OF THE DISCLOSURE

Since both cache operation of the instruction RAM and parallel processing in the hardware unit is conducted in such a prior art integrated circuit for modem, there is a problem that the integration scale and the circuit area is high. Reduction in manufacturing cost is always required for competition with products of the other manufactures.

Accordingly, it is an object of the present invention is to reduce the circuit area of the integrated circuit for modem to achieve the reduction in the manufacturing cost.

According to a first aspect of the present invention, there is provided an integrated circuit for modem including a hardware unit for conducting an error correction processing, interleave processing and digital signal processing for transmission and reception data; an instruction RAM comprising a plurality of banks, which functions as a cache memory of an external instruction RAM; and a CPU which executes an instruction which is prefetched to the instruction RAM for controlling the hardware unit, characterized in that the CPU and the hardware time-divisionally share part of the banks of the instruction RAM.

Further aspects and features of the present invention are disclosed in the appended claims, the entire disclosure of which is being incorporated herein by reference thereto.

The hardware unit divides the banks of the instruction RAM and uses part of the banks of the instruction RAM as a memory for interleave processing.

The circuit comprises an RAM controller which conducts controlling so that instructions are prefetched from the external instruction ROM to the instruction RAM on a bank basis to cause the instruction RAM to function as a cache memory of the external instruction ROM and conducts controlling to cause the CPU and the hardware unit to time-divisionally share part of the banks of the instruction RAM.

The RAM controller receives data, address and write control signal from an interleave RAM interface of the hardware unit and outputs them to part of the banks of the instruction RAM and outputs them to an interleave RAM interface of the hardware unit by selecting the data output of part of the banks of the hardware unit during the transmission and reception of the data.

The RAM controller comprises
a higher order address to which high order addresses are input from an interleave RAM interface of the hardware unit and are decoded and from which a bank selection signal for the interleave RAM is output;
a gate circuit to which a write control signal is input from the interleave RAM interface of the hardware unit and which is controlled by the bank selection signal for outputting a bank write control signal for the interleave RAM therefrom;
a (first) multiplexer to which data is input from the interleave RAM interface of the hardware unit and which switches to part of the banks of the instruction RAM in response to a connection switching signal for outputting data thereto;
a (second) multiplexer to which an address and the bank write control signal are input from the interleave RAM interface of the hardware unit and the gate circuit and switches to part of the banks of the instruction RAM in response to the connection switching signal for outputting them thereto; and
a selector which selects a data output from the part of the banks of the instruction RAM in response to the bank selection signal and to output the data to the interleave RAM interface of the hardware unit.

The RAM controller comprises a control register in which commands which are preset by the CPU are stored and in which the connection switching signal is generated corresponding to the content of control register.

### BRIEF DESCRIPTION OF THE DRAWINGS

Fig. 1 is a block diagram showing an embodiment of the integrated circuit for modem of the present invention.

Fig. 2 is a circuit diagram showing the configuration of the RAM controller 5 and the instruction RAM 2 in the integrated circuit for modem, which is shown in Fig. 1.

Fig. 3 is an explanatory view explaining the operation of the RAM controller 5 in the integrated circuit for modem in Fig. 1.

Fig. 4 is a block diagram showing the exemplary configuration.

### PREFERRED EMBODIMENTS OF THE INVENTION

Now, the present invention will be described with reference to drawings.

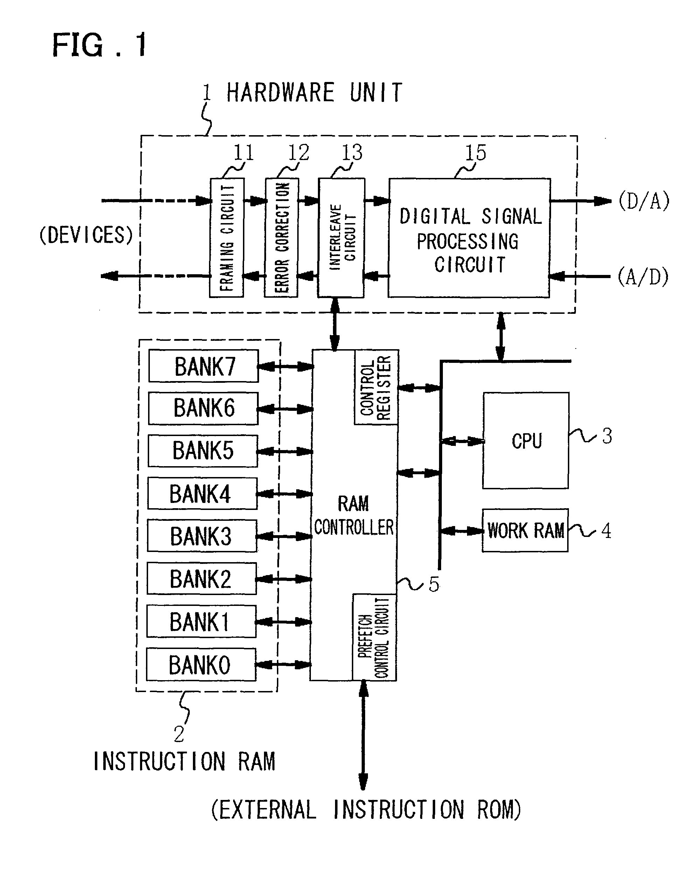

Fig. 1 is a block diagram showing a mode of embodying the integrated circuit for modem of the present invention.

Referring to Fig. 1, the integrated circuit for modem of the present embodiment comprises a hardware unit 1, instruction RAM 2, CPU 3, work RAM 4 and RAM controller 5 as is similar to the prior art integrated circuit for modem. The integrated circuit for modem of the present invention is different from the prior art integrated circuit for modem in that the hardware unit 1 does not include any interleave RAM and in that the RAM controller 5 is connected to the interleave RAM interface of the interleave circuit 13 of the hardware unit 1. Since the blocks 2 to 4, 11, to 13, 14 are identical to those in the prior art integrated circuit for modem excepting the RAM controller, description of them will be omitted herein for simplicity of description.

The RAM controller 5 performs such a control that the instructions are prefetched from the external instruction ROM to the instruction RAM 2 on a bank basis and the instruction RAM 2 is caused to operate as a cache memory for the external instruction ROM and the CPU and the hardware unit 1 are caused to the time-divisionally share part of banks of the instruction RAM 2.

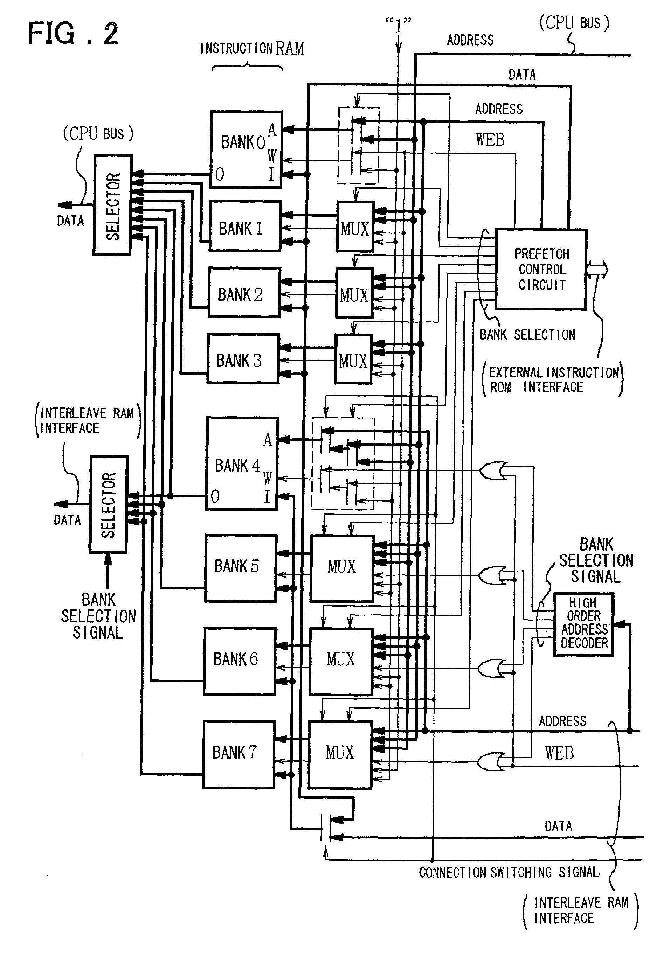

Fig. 2 is a circuit diagram showing the configuration of the RAM controller 5 and the instruction RAM 2 in detail.

Referring now to Fig. 2, the RAM controller 5 performs such a control that instructions are prefetched from the external instruction ROM to the instruction RAM 2 on a bank basis by means of a prefetch control circuit as is similar to the prior art to cause the instruction RAM 2 to operate as a cache memory of the external instruction ROM and performs connection control to switch the banks 4 to 7 of the instruction RAM 2 to connect the interleave RAM interface of the hardware unit 1 in response to a connection switching signal which is activated under control of CPU 3.

Main block for the switching connection control comprises a higher order address to which high order addresses are input from an interleave RAM interface of the hardware unit and decoded are from which a bank selection signal for the interleave RAM is output; a gate circuit to which a write control signal is input from an interleave RAM interface of the hardware unit and which is controlled by the bank selection signal for outputting a bank write control signal for the interleave RAM therefrom; a (first) multiplexer to which data is input from the interleave RAM interface of the hardware unit and which switches to part of the banks of the instruction RAM in response to a connection switching signal for outputting data thereto; a (second) multiplexer to which an address and the bank write control signal are input from the interleave RAM interface of the hardware unit and the gate circuit and switches to part of the banks of the instruction RAM in response to the connection switching signal for outputting them thereto; and a selector which selects an data output from the part of the banks of the instruction RAM in response to the bank selection signal and to output the data to the interleave RAM interface of the hardware unit.

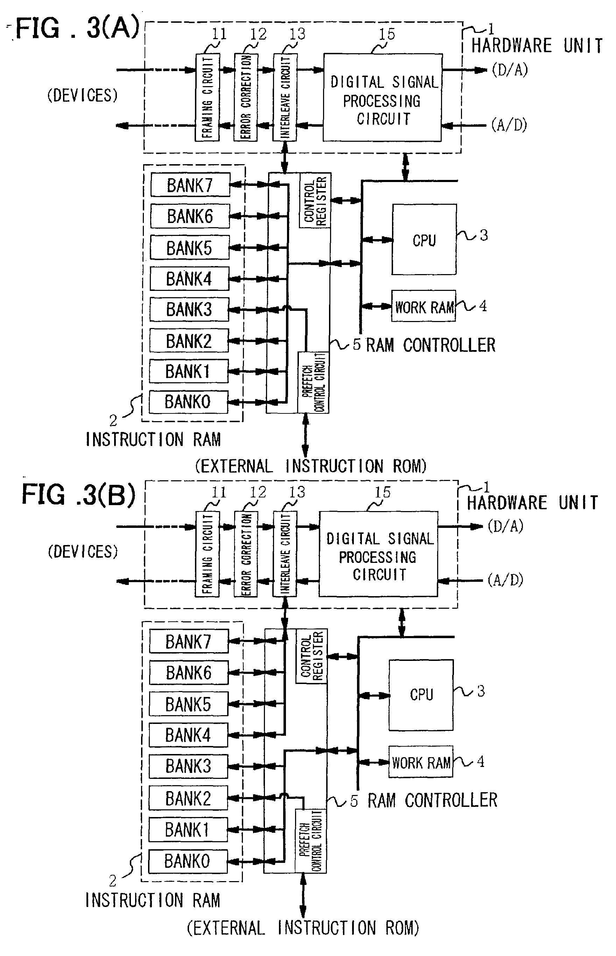

Fig. 3 is an explanatory view explaining the operation of the RAM controller 5 in the integrated circuit for modem in the present embodiment, schematically showing the connection condition of the banks of the instruction RAM 2 in the RAM controller 5. The operation of the integrated circuit for modem of the present embodiment will be described with reference to Fig. 3.

In ADSL modems and the like, following initialization sequence processing is conducted between modems which will communicate to each other prior to starting the data transmission and reception.
(1) Exchange of essential communication parameters
(2) Training of various equalizers in a digital signal processing circuit which conducts processing for modulation and demodulation
(3) Measurement of line quality (S/N ratio)
(4) Determination and exchange of the bit arrangement and the transmission rate used for transmission.

In order to conduct this initialization processing, the CPU 2 in the integrated circuit for modem controls the digital signal processing circuit 15 of the hardware unit 1 within a predetermined period of time and reads out received signals from the digital signal processing circuit 15 of the hardware unit 1 for conducting various calculations.

Since the data is not transmitted or received during this initialization sequence processing, the interleave circuit 13 of the hardware unit 1 does not operate so that the interleave RAM is not necessary while the amount of the data which is processed by the CPU 3 is large. Accordingly, as shown in Fig. 3(A), in the RAM controller 5, all of the banks of the instruction RAM 2 interfaces with the CPU bus or the prefetch control circuit and all of the banks of the instruction RAM 2 operate as a cache memory as is similar to the case with prior art.

After transmission and reception of the data has been started, the CPU 2 in the integrated circuit for modem mainly conducts monitor processing for detecting the abnormal conditions of the transmission and reception in the hardware unit 2.

Since the data is being transmitted or received during this monitor processing, the interleave circuit 13 of the hardware unit 1 operates so that the interleave RAM is necessary. On the other hand, the rate of the data, which is processed by the CPU 3, is less than that in the above-mentioned initialization sequence processing. Accordingly, the connection switching signal is activated under control of the CPU 3 in the RAM controller 5 as shown in Fig. 3(B) so that the banks 4 to 7 of the instruction RAM 2 is switched so that it is connected to the interleave RAM interface of the hardware unit 1. The banks 0 to 3 of the instruction RAM 2 are interfaced with the CPU bus or the prefetch control circuit so that it functions as a cache memory.

As mentioned above, the integrated circuit for modem of this embodiment performs cache operation of the instruction RAM and parallel processing in the hardware unit similarly to the case with prior art and has the same functions and performances as those of the prior art and is capable of reducing the capacity of the RAM to be used and of implementing high rate communications modem such as ADSL modems and the like.

The meritorious effects of the present invention are summarized as follows.
As mentioned above, the integrated circuit for modem of the present invention have advantages that it can reduce the capacity of the RAM to be used and it can be manufactured at low cost.

The reason resides in that part of the banks of the instruction RAM operating as the cache memory for the external instruction ROM is shared for use as the interleave RAM during transmission and reception of the data.

It should be noted that other objects, features and aspects of the present invention will become apparent in the entire disclosure and that modifications may be done without departing the gist and scope of the present invention as disclosed herein and claimed as appended herewith.

Also it should be noted that any combination of the disclosed and/or claimed elements, matters and/or items might fall under the modifications aforementioned.

## Claims

1. An integrated circuit for modem including:
a hardware unit for conducting an error correction processing, interleave processing and digital signal processing for transmission and reception data;
an instruction RAM comprising a plurality of banks, which functions as a cache memory of an external instruction RAM; and
a CPU which executes an instruction which is prefetched to the instruction RAM for controlling said hardware unit, **characterized in that** said CPU and said hardware time-divisionally share part of the banks of said instruction RAM.

2. An integrated circuit for modem as defined in Claim 1 in which said hardware unit divides the banks of said instruction RAM and uses part of the banks of said instruction RAM as a memory for interleave processing.

3. An integrated circuit as defined in Claim 1 or 2 in which said circuit comprises an RAM controller which conducts controlling so that instructions are prefetched from said external instruction ROM to said instruction RAM on a bank basis to cause said instruction RAM to function as a cache memory of said external instruction ROM and conducts controlling to cause said CPU and said hardware unit to time-divisionally share part of the banks of said instruction RAM.

4. An integrated circuit for modem as defined in Claim 3 in which said RAM controller receives data, address and write control signal from an interleave RAM interface of said hardware unit and outputs them to part of the banks of said instruction RAM and outputs them to an interleave RAM interface of said hardware unit by selecting the data output of part of the banks of said hardware unit during the transmission and reception of the data.

5. An integrated circuit for modem as defined in Claim 3 or 4 in which said RAM controller comprises
a higher order address to which high order addresses are input from an interleave RAM interface of said hardware unit and are decoded and from which a bank selection signal for the interleave RAM is output;
a gate circuit to which a write control signal is input from the interleave RAM interface of said hardware unit and which is controlled by said bank selection signal for outputting a bank write control signal for the interleave RAM therefrom;
a (first) multiplexer to which data is input from the interleave RAM interface of said hardware unit and which switches to part of the banks of said instruction RAM in response to a connection switching signal for outputting data thereto;
a (second) multiplexer to which an address and said bank write control signal are input from the interleave RAM interface of said hardware unit and said gate circuit and switches to part of the banks of said instruction RAM in response to said connection switching signal for outputting them thereto; and
a selector which selects a data output from the part of the banks of said instruction RAM in response to said bank selection signal and to output the data to the interleave RAM interface of said hardware unit.

6. An integrated circuit for modem as defined in one of Claims 3 to 5 in which said RAM controller comprises a control register in which commands which are preset by said CPU are stored and in which said connection switching signal is generated corresponding to the content of control register.
